# EUROPEAN PATENT APPLICATION

(11) **EP 2 298 548 A1**
(43) Date of publication of application: **23.03.2011**
(21) Application number: 10193571.6
(22) Date of filing: 18.02.2009
(51) Int. Cl.: B32B 21/14, C09J 123/26, C09D 151/06

(54) **Self-adhesive material and its manufacturing method**

(30) Priority: 18.02.2008 FI 20085150; 18.02.2008 FI 20085151; 16.05.2008 FI 20085466; 16.05.2008 FI 20085467
(62) Divisional of application: 09713581.8
(71) Applicant: UPM-Kymmene Wood Oy, 15140 Lahti (FI)
(72) Inventor: Kiljunen, Samantha, 53500, Lappeenranta (FI); Wilén, Robin, 2450, Copenhagen SV (DK); Nieminen, Harri, 15300, Lahti (FI); Heikkilä, Timo, 15140, Lahti (FI)
(74) Representative: Papula Oy

(57) **Abstract**

The invention relates to a self-adhesive material and method for manufacturing a self-adhesive material. In accordance with the invention, self-adhesive material is formed of polyolefin film, and polyolefin film contains reactive groups for forming covalent bonds between the polyolefin film and other material, and the reactive groups of the polyolefin film are activated during the preparation of the self-adhesive material.

## Description

### FIELD OF THE INVENTION

The invention relates to a self-adhesive material as defined in the preamble of claim 1 and to a method for manufacturing a self-adhesive material as defined in the preamble of claim 13.

### BACKGROUND OF THE INVENTION

Known from prior art are various wood boards and methods for manufacturing wood boards. Wood boards meant here are, for example, plywood, particle boards and hard and medium hard fiber boards.

For preparing the wood board resins and various gluing material are used to glue and join together veneers of the wood board. Plywood is traditionally made with phenol formaldehyde as the adhesive resin. However, other adhesives have been used and some of these alternatives are polymer based. However, the adhesive bond formed very often in dry conditions is much greater than for phenol formaldehyde based adhesives after soaking and boiling the bond strength and wood fibre breakage fall short of the accepted standard requirements.

Blow-out during plywood manufacture is a major problem even when phenol formaldehyde adhesives are used. It is caused by the vapour pressure in the plywood being greater than the strength of the adhesive bond. Plywood is hot-pressed above 100 °C which means that any moisture in the veneers is converted to steam. When the hot-press is opened if the strength of the adhesive bond is not strong enough the plywood will blow. This occurrence can be minimised by keeping the moisture content of the veneers < 5 %. However, it should also be remembered that unlike thermosets thermoplastics do not form there strongest bond until the temperature falls below the polymer crystalline temperature. Therefore, the ideal condition to avoid blow-out is to keep the moisture content of the veneers < 3% or and keep the pressure applied until the temperature of the polymer is below its crystalline temperature. This is possible by following the hot-press with a cold press or using a continuous hot-cold press.

Also known is to use maleated polyethylene (MAPE) or maleated polypropylene (MAPP) for making wood fiber-polymer composites, where the maleated polymer is used as a coupling agent between the fiber and polymer. Known is that cellulose fibers can be surface modified with polypropylene-maleic anhydride copolymer.

Further, known from e.g. patent application EP 0782917 is the preparation of a coated board with extruded films. The film comprises in one embodiment maleic anhydride grafted ethyl-vinyl acetate cho-polymers (MA-g-EVA). No treatment, e.g. no activation, of the film during film manufacture is employed.

### OBJECTIVE OF THE INVENTION

The objective of the invention is to disclose a new type of self-adhesive material, plywood and a method for manufacturing plywood. The invention aims to solve coating and gluing the veneers of the plywood with a complete new and very simple way.

### SUMMARY OF THE INVENTION

A self-adhesive material and a manufacturing method according to the invention are characterized by what is presented in the claims.

The invention is based on a self-adhesive material. The self-adhesive material is formed of polyolefin film and the polyolefin film contains reactive groups for forming covalent bonds between the polyolefin film and the other material, and the reactive groups of the polyolefin film are activated during the preparation of the self-adhesive material.

Further, the invention is based on a method for manufacturing a self-adhesive material so that the self-adhesive material is formed of polyolefin film containing reactive groups so that polyolefin film becomes adhesive and reactive with the other material for forming covalent bonds between the polyolefin film and other material, and the reactive groups of the polyolefin film are activated during the preparation of the self-adhesive film.

The invention is based on a post formable plywood product. The post formable plywood product is formed so that the veneers of the plywood are joined together. In accordance with the invention, the veneers are bound together by self-adhesive material formed of polyolefin film, and polyolefin film contains reactive groups with -OH groups of the wood for forming covalent bonds between the veneer and polyolefin film. Polyolefin film is a self-adhesive by means of the reactive groups.

Further, the invention is based on a method for manufacturing a post formable plywood product, in which the veneers of the post formable plywood product are joined and pressed together by glue material and heat. In accordance with the invention, the glue material is a self-adhesive material formed of polyolefin film containing reactive groups with -OH groups of the wood for forming covalent bonds between the veneer and polyolefin film, and the self-adhesive material is attached between veneers for gluing the veneers together and heated so that polyolefin film becomes adhesive and reactive with the -OH groups of the veneers for forming covalent bonds between the veneer and polyolefin film.

In this context, a post formable plywood product refers to any preform or final plywood product, or the like, formed of a number of veneers and principally of wood-based materials, in which the veneers are laid one upon the other and glued together. In this context, a veneer refers to any layer of material, typically a thin layer of material.

A post formable plywood product according to the invention can comprise veneer layers of different thickness. The thicknesses of the veneer layers can vary. The veneer layers can be arranged in the desired position, i.e. crosswise or lengthwise in the desired order.

The invention is specifically based on the post formed plywood which can be shaped by reheating. The post formed plywood based on the use of the self-adhesive material which is grafted by reactive groups, e.g. maleic anhydride groups, which react and form covalent bonds with -OH groups in other material e.g. natural products like wood or wood derivative products.

In one embodiment of the invention the polyolefin film comprises at least two layers which are the first and second layer, and at least the first layer is a self-adhesive layer so that it contains reactive groups with -OH groups of the wood.

In one embodiment of the invention the polyolefin film comprises at least three layers and the outer layers of the film are self-adhesive layers so that they contain reactive groups with -OH groups of the wood.

In one embodiment at least one additive layer is arranged between the first and second layers. In one embodiment the film can comprises more than one additive layers e.g. 2 - 10 additive layers. In one embodiment the additive layer can contain functional additive. In one embodiment the additive layer can contain, for example, fire retardants, UV-stabilisers and fillers.

In one embodiment of the invention the polyolefin film is at least partially cross-linked. In one embodiment the second layer is at least partially cross-linked. In on embodiment the first layer is at least partially cross-linked. In one embodiment the polyolefin film is cross-linked by a method selected from group: silane moisture method, electron beam (EB) radiation, vinyl-silane hydrolysis and their combinations. The cross-linking can be made during the film preparation or before the film is pressed on veneer of the plywood. Alternatively the cross-linking can be made during or after the manufacturing of the preform or final plywood at the temperature of less than melting point of the polyolefin.

In one embodiment of the invention polyolefin is selected from group: polyethylene, polypropylene and their combinations. The polyolefin film or each layer can include additives and fillers.

The polyolefin film and/or the film layers can be made from petrochemical and renewable feedstock materials. In addition to bioplastic material can be used. In addition to bio-based polymers can be used. Preferably, the bio-based polymers have processing temperature over 180 °C or over 190 °C. In one embodiment, all film layers are substantially formed of the same material. In an alternative embodiment, at least one film layer is formed of a different material than the other films layers.

Compatibilisers can be added to the film in order to adhere the dissimilar polymers to each other.

In one embodiment of the invention the reactive groups of the polyolefin film is activated at temperatures of more than 180 °C, in one embodiment at temperatures of more than 190 °C, during the manufacturing of the polyolefin film. In one embodiment, the sufficient time for activation is about 0.5 - 3 minutes, in one embodiment about 2 - 3 minutes. Then the film formed contains activated functional groups capable of forming the maximum number of covalent bonds with wood.

In one embodiment a polyolefin film has a melt index which is ≤ 4 g/10 min (measured 190 °C/2.16 kg). Then the polyolefin film is able to keep film forming properties at temperatures of more than 180 °C or at temperatures of more than 190 °C.

In one embodiment of the invention the polyolefin film contains maleated polyolefin which contains maleic anhydride reactive groups.

In one embodiment of the invention the film layer contains polyethylene (PE), polypropylene (PP), maleic anhydride polyethylene (MAPE), maleic anhydride polypropylene (MAPP) or derivates thereof or their combinations. In a preferred embodiment at least one film layer contains maleic anhydride polyolefin. In one embodiment the outer film layers contain maleic anhydride polyolefin.

The polyolefin films can be adhered directly to the wood when the film is maleated on both side and especially when the maleated layer is treated so that its temperature during manufacturing has been over 180°C or over 190°C, so that maleic acid is converted to maleic anhydride. Maleic anhydride is very reactive with wood, forming a covalent bond with celluloses -OH groups. Without this activation, normal maleated film forms predominantly hydrogen bonds, which are much weaker than covalent chemical bonds. So the polyolefin film can be bonded directly to wood surface without any priming and joining layers.

In a preferred embodiment of the invention the self-adhesive material and the veneers are joined together by means of the maleic anhydride polyolefin. The maleic anhydride polyolefin forms chemical and mechanical bonds between the polyolefin film and the veneer of the plywood.

In a preferred embodiment the film or the film layer which includes maleated polyolefin also contains polymer e.g. polyethylene or polypropylene. Preferably, the film layer including maleated polyolefin essentially consists of MAPE+PE or MAPP+PP.

In one embodiment of the invention maleated polyolefin contains maleic acid 0.3 - 15 % by weight of the maleated polyolefin, in one embodiment 1 - 5 % by weight of the maleated polyolefin. Preferably, the film layer is maleated to the desired degree in order to improve friction and wetting properties of the self-adhesive material.

In one embodiment the polyolefin film contains iso-cyanate grafted polyolefin which contains reactive groups.

In one embodiment the polyolefin film or layer of the film is grafted with alkoxysilane containing reactive functional groups with the polyolefin.

The thickness of the polyolefin film may vary depending on the properties of the film materials and the application of the plywood. In one embodiment of the invention the polyolefin film has thickness between 50 - 350 µm.

The self-adhesive material can be prepared by using apparatuses and methods known per se, e.g. by extrusion or by co-extrusion.

The plywood can be made by using apparatuses and methods known per se. Laying the veneers one upon the other, joining them together and other typical steps in making the plywood can be performed in any manner known per se in the art. The self-adhesive material is arranged between the veneers of the plywood by using the hot pressing technique, extruder technique, film technique, roll application technique, cylinder application technique, coat and multi-layer coat application technique, all known per se, their combinations or a corresponding technique. The veneers can be joined together e.g. using the hot pressing technique and/or high frequency technique.

In one embodiment of the invention the self-adhesive material is attached onto the veneers of the plywood by hot-pressing at temperatures of 120 - 170 °C. A benefit of one embodiment of this invention is that temperatures of only 120 - 140 °C are needed to fix the film onto the veneer surface. The hot-pressing conditions, like temperature, pressure and time, depend on the wood type, e.g. spruce or birch, and polymer melting temperature. It is important in order to induce plastic melt flow that the hot-pressing temperature is set to a temperature 20 - 50 °C above the melting temperature of the polymer. In one embodiment pressing time is 2 to 12 minutes depending on the thickness of the post formable plywood product.

In one embodiment of the invention the polyolefin film is heated by high frequency heating in which parameters are 2 - 8 minutes and 12 - 14 MHz.

In one embodiment of the invention the post formable plywood product is post-formed. Preferably post-forming is made at the temperature of more than melting point of the polyolefin. When the plywood is formable the plywood can be reheated in an oven or microwave. Pressure is not required during the reheating but it is desired that the plywood is formed under pressure and cooled in order not to damage the bonds formed during the initial hot-pressing.

In one embodiment of the invention the method comprises two stages, at the first stage a post formable plywood product is formed and at the second stage a final plywood product is formed by post-forming the preformed post formable plywood product.

In one embodiment the self-adhesive material can be arranged onto the post formable plywood product as a coating.

In one embodiment a catalyst is used in film manufacturing. The catalyst increases the frequency of the covalent bonds formed between coupling agent, e.g. maleic anhydride, and wood. Catalyst known to create such bonds and preferred is zinc anhydride. Preferably, the catalyst is hydrated zinc acetate. The catalyst cannot be extruded in the same layer as the coupling agent, e.g. maleic anhydride, because it will open the maleic anhydride cyclic ring. Therefore, the catalyst can be applied to the films after extrusion and activated by heat during hot-pressing or applied directly to the wood. Alternatives are to extrude films of varying thickness (0,05 - 0.1 mm) such that one film contains catalyst in the outer layers and another the activated coupling agent such that the films are then during hot-pressing melt blended and reaction with the wood.

The invention provides post formable plywood product. The plywood can be shaped by reheating. The adhesion between the veneers of the plywood is excellent by self-adhesive material.

The plywood product of the current invention differs from the prior art in that the self-adhesive films form a bond that is as strong as wood itself. Also unlike with traditional plywood the invention presented here requires a post press rather than a pre-press. In addition to this since thermoplastics are used it is also possible to re-heat the plywood and form it into shape. The invention allows for both flat and curved plywood to be possible in the same panel. In addition to this the thermoplastic adhesive film reduces the overall moisture up-take of the plywood such that it is more dimensionally stable than standard plywood. The moisture up-take is 50% less than standard plywood which is on the same level as heat treated plywood but with no loss in mechanical properties.

The plywood in accordance with the invention are suitable for various applications. The plywood can be used for applications where good formable is needed, e.g. kitchens and furniture, transport applications and formwork.

### LIST OF FIGURES

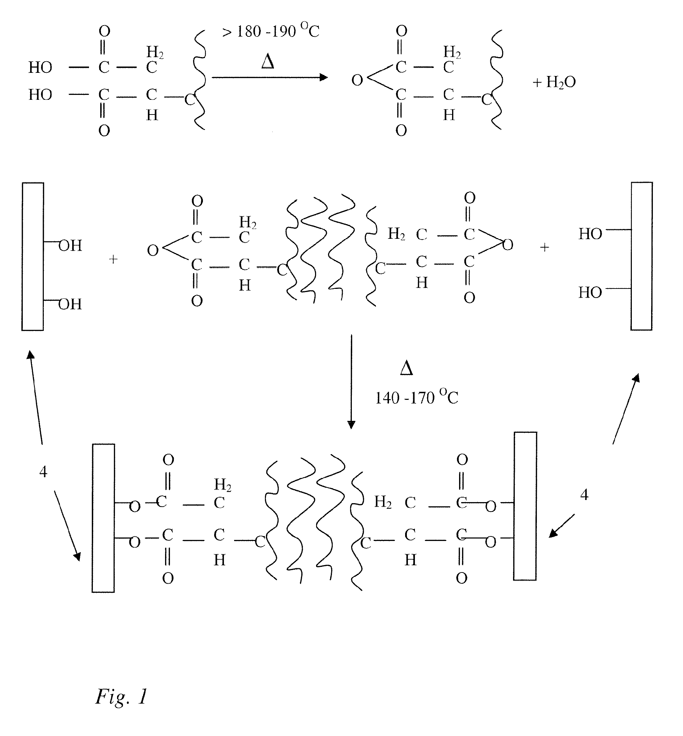

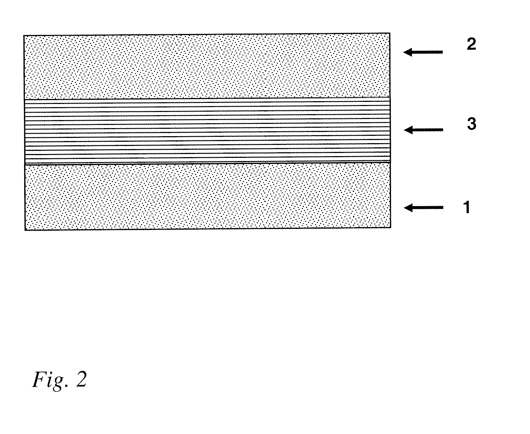

In the following, the invention is described by means of detailed embodiment examples with reference to accompanying figures 1 and 2, in which
Fig. 1 shows a schematic diagram of the chemical reactions, and
Fig. 2 shows a self-adhesive material structure according to the invention.

### DETAILED DESCRIPTION OF THE INVENTION

Figure 1 discloses a schematic diagram of the chemical reactions in the manufacturing the self-adhesive material and the plywood. To make the plywood of the invention there are many steps. First is selection of the raw materials. Then is the conversion of the maleated material from maleic acid to maleic anhydride. The self-adhesive film is made it needs to be attached to the plywood where the active maleic anhydride groups react with the hydroxide groups of the wood in veneers (4) of the plywood.

Figure 2 discloses a self-adhesive material structure of the invention.

The self-adhesive material is formed of a film which comprises three layers: first (1), second (2) and additive (3) layers. The first layer is a bottom layer (1), second layer is a top layer (2) and additive layer (3) is arranged between the first (1) and second (2) layers.

The top (2) and bottom (1) film layers (2) are formed of polyolefin, e.g. polyethylene or polypropylene, and maleated polyolefin, e.g. maleic anhydride polyethylene (MAPE) or maleic anhydride polypropylene (MAPP).

The additive layer (3) is sandwiched between the top layer (2) and the bottom layer (1). The additive layer is formed of cross-linkable polyethylene or polypropylene including additives, like fire retardants, biocides and UV-stabilisers, and fillers.

The self-adhesive material and the plywood used in the tests can be prepared following. At the first stage, the three-layer self-adhesive film is prepared of polyolefin, maleated polyolefin and additives and fillers by co-extruding. Maleated polyolefin contains maleic acid which is converted maleic anhydride at temperatures of more than 190 °C during the manufacturing of the film. The desired film layer can be cross-linked by electron beam radiation at this stage. The layers of the film are joined together for forming the film. At second stage, the formed film is cut to size and is arranged between the veneers of the plywood. The veneers are bound together by hot pressing, cold pressing and/or high frequency pressing. The hot pressing is made at temperatures of about 120 - 170 °C, at pressure of about 1.2 - 1.9 N/mm² and by time of 2 - 12 minutes. The cold pressing can follow the hot pressing. The cold pressing is made until the temperature falls below 80 - 100 °C, at pressure of about 1.2 - 1.9 N/mm² and by time of 0.5 - 7 minutes. The high frequency pressing is made by frequency of 12 - 14 MHz and time of about 2 - 8 minutes. In an alternative embodiment, the self-adhesive material can be cross-linked by radiation or silane-moisture method at this stage. The post formable plywood product formed can be reheated and moulded into shape.

When dissimilar polymers are co-extruded a compatibiliser material is required in the self-adhesive material to join the dissimilar materials.

The maleated polyolefin contains normally 2 - 15 % maleic acid of the amount of polyolefin. At extrusion at temperatures of more 180 °C the maleic acid is converted to maleic anhydride, partially or totally. The polymer film can also be cross-linkable if it in any case improves the use of the products.

When the plywood is glued with phenol formaldehyde adhesive the creep of the glue line layer is insignificant in practice but when using thermoplastics this is not the case and depending on the application (e.g. construction) this could prove to be critical. Wood creeps and therefore it is important that the films don't creep anymore than the wood itself. This can be accomplished in many ways as follows:
(1) Film thickness: If the films used result in a thin enough glue-line then essentially the wood will creep more. However, the film thickness (glue line) will depend on the wood type and product application.
(2) Cross-linking and partial cross-linking of the films or plywood: The films can be cross-linked (both silane and radiation versions) before hot pressing between the veneers but it is quite possible in the case of radiation treatment this could result in the whole film being cross-linked and not just the surface. If the whole film is cross-linked this will result in problems in hot-pressing the films to the veneers. Cross-linking by silane or E-Beam radiation is possible after making the plywood but again in the case of E-beam radiation care needs to be taken as it is possible the wood can be damaged.
(3) Higher molecular weight polymers: If the middle layer contains higher molecular weight polyolefins (HDPE) this will increase the creep resistance.

### Examples

In these examples, the self-adhesive materials of Figure 2 and the post formable plywood of the invention were prepared and used in the tests. The test results were compared the results of traditional plywood with phenol resin glue line.

### Example 1

The 11-ply post formable plywood was prepared of birch veneers and the self-adhesive material used as glue. The veneers and the self adhesive material are joined together by hot-pressing. Veneer thickness was 1.5 mm. Hot-pressing conditions were 140 °C, 1.7 N_{/}mm² and 0.2 N/mm² for 760 seconds. Higher pressure was applied for 540 seconds. Cold pressing conditions were 300 seconds at 1.7 N/mm².

The self-adhesive film material comprises three layers: 2%MAPE+PE /PE/ PE+2%MAPE. Its thickness was 0.27 mm. The film was arranged between each veneer.

### Example 2

The 11-ply post formable plywood was prepared of spruce veneers and the self-adhesive material used as glue. The veneers and the self adhesive material are joined together by hot-pressing. Veneer thickness was 1.5 mm. Hot-pressing conditions were 140 °C, 1.2 N_{/}mm² and 0.2 N/mm² for 760 seconds. Higher pressure was applied for 540 seconds. Cold pressing conditions were 300 seconds at 1.2 N/mm².

The self-adhesive film material comprises three layers: 2%MAPE+PE /PE/ PE+2%MAPE. Its thickness was 0.27 mm. The film was arranged between each veneer.

### Example 3

The 11-ply post formable plywood was prepared of birch veneers and the self-adhesive material used as glue. The veneers and the self adhesive material are joined together by high frequency pressing. Veneer thickness was 1.5 mm. High frequency pressing conditions were 13.56 MHz (power 9 kW) for 8 minutes.

The self-adhesive film material comprises three layers: 2%MAPE+PE /PE/ PE+2%MAPE. Its thickness was 0.27 mm. The film was arranged between each veneer.

From the tests (examples 1 - 3) it was discovered that the bond strength of the self-adhesive material after boiling and soaking (EN314-1 and EN314-2) was better than for phenol resin. The plywood of the invention had similar bending properties than the traditional plywood. The moisture up-take was reduced by 50 % when the plywood is bonded with films of the invention as apposed to phenol formaldehyde resin. With regards to improved dimensional stability the film bonded plywood is on the level of heat treated wood without the loss in mechanical properties.

From the tests it was discovered that adhesion between the self-adhesive material and -OH groups of the veneer is excellent.

Further, it was clear that reheating actually improves on the overall adhesive strength owing to better penetration into the wood.

A post formable plywood product according to the invention is suitable in its different embodiments for different types of applications.

The embodiments of the invention are not limited to the examples presented rather many variations are possible within the scope of the accompanying claims.

## Claims

1. A self-adhesive material, **characterized in that** the self-adhesive material is formed of polyolefin film and the polyolefin film contains reactive groups for forming covalent bonds between the polyolefin film and the other material, and the reactive groups of the polyolefin film are activated during the preparation of the self-adhesive material.

2. The self-adhesive material according to claim 1, **characterized in that** the reactive groups of the polyolefin film are activated at temperatures of more than 180 °C during the preparation of the self-adhesive material.

3. The self-adhesive material according to claim 1 or 2, **characterized in that** the reactive groups of the polyolefin film are activated 2 - 3 minutes during the preparation of the self-adhesive material.

4. The self-adhesive material according to any one of claims 1 to 3, **characterized in that** the polyolefin film contains maleated polyolefin which contains maleic anhydride reactive groups.

5. The self-adhesive material according to any one of claims 1 to 4, **characterized in that** the reactive groups are reactive with -OH groups and form covalent bonds with -OH groups of the other material.

6. The self-adhesive material according to any one of claims 1 to 5, **characterized in that** the polyolefin film is at least partially cross-linked.

7. The self-adhesive material according to any one of claims 1 to 6, **characterized in that** the polyolefin film comprises at least two layers which are the first (1) and second (2) layer, and at least the first layer (1) is a self-adhesive layer so that it contains reactive groups.

8. The self-adhesive material according to any one of claims 1 to 7, **characterized in that** the polyolefin film comprises at least three layers and the outer layers (1, 2) of the film are self-adhesive layers so that they contain reactive groups.

9. The self-adhesive material according to any one of claims 1 to 8, **characterized in that** polyolefin is selected from group: polyethylene, polypropylene and their combinations.

10. The self-adhesive material according to any one of claims 1 to 9, **characterized in that** the maleated polyolefin contains maleic acid 0.3 - 15 % by weight of the maleated polyolefin, and maleic acid is converted to maleic anhydride during the activation.

11. The self-adhesive material according to any one of claims 1 to 10, **characterized in that** the other material is natural product and the reactive groups of the polyolefin film form covalent bonds with the natural product.

12. The self-adhesive material according to claim 11, **characterized in that** the other material is wood and the reactive groups of the polyolefin film form covalent bonds with the wood.

13. Method for manufacturing a self-adhesive material, **characterized in that** the self-adhesive material is formed of polyolefin film containing reactive groups so that the polyolefin film becomes adhesive and reactive with the other material for forming covalent bonds between the polyolefin film and other material, and the reactive groups of the polyolefin film are activated during the preparation of the self-adhesive film.

14. The method according to claim 13, **characterized in that** the reactive groups of the polyolefin film are activated at temperatures of more than 180 °C during the preparation of the self-adhesive film.

15. The method according to claim 13 or 14, **characterized in that** the reactive groups of the polyolefin film are activated at temperatures of more than 190 °C during the preparation of the self-adhesive film.

16. The method according to any one of claims 13 to 15, **characterized in that** the reactive groups of the polyolefin film are activated 2 - 3 minutes during the preparation of the self-adhesive film.

17. The method according to any one of claims 13 to 16, **characterized in that** the polyolefin film containing maleated polyolefin which contains maleic anhydride reactive groups.

18. The method according to any one of claims 13 to 17, **characterized in that** the reactive groups form covalent bonds with -OH groups of the other material.

19. The method according to any one of claims 13 to 18, **characterized in that** the self-adhesive material is heated at temperatures of between 120 - 170 °C when the self-adhesive film is attached on the other material.

20. The method according to any one of claims 13 to 19, **characterized in that** natural products like wood is used as other material.

21. The method according to any one of claims 13 to 20, **characterized in that** the maleated polyolefin contains maleic acid, and maleic acid is converted to maleic anhydride during the activation.
